# EUROPÄISCHE PATENTSCHRIFT

(11) **EP 3 596 805 B1**
(45) Veröffentlichungstag und Bekanntmachung des Hinweises auf die Patenterteilung: **17.02.2021**
(21) Anmeldenummer: 18720144.7
(22) Anmeldetag: 13.04.2018
(51) Int. Cl.: H02K 5/02, H02K 5/04, H02K 5/16, H02K 15/14

(54) **ROTIERENDE ELEKTRISCHE MASCHINE UND VERFAHREN ZU DEREN HERSTELLUNG**
ROTATING ELECTRICAL MACHINE AND METHOD FOR PRODUCTION THEREOF
MACHINE TOURNANTE ÉLECTRIQUE ET SON PROCÉDÉ DE FABRICATION

(30) Priorität: 21.04.2017 EP 17167570
(43) Veröffentlichungstag der Anmeldung: 22.01.2020
(73) Patentinhaber: Siemens Aktiengesellschaft, 80333 München (DE)
(72) Erfinder: BACH, Regina, 97640 Hendungen (DE); VOLKMUTH, Benjamin, 97717 Sulzthal (DE)
(86) Internationale Anmeldenummer: PCT/EP2018/059510
(87) Internationale Veröffentlichungsnummer: WO 2018/192849

(56) Entgegenhaltungen:
- DE-A1-102016 000 819
- GB-A- 463 015
- JP-A- 2013 224 469
- US-A1- 2013 207 505

## Beschreibung

Die Erfindung betrifft eine rotierende elektrische Maschine und ein Verfahren zur Herstellung einer rotierenden elektrischen Maschine.

Rotierende elektrische Maschinen weisen verschiedene Maschinenkomponenten auf, die in der Regel durch mechanische Verbindungselemente, insbesondere durch Schrauben, und Dichtelemente miteinander verbunden werden. Dazu weisen die Maschinenkomponenten entsprechende Schnittstellen wie Gewinde, Durchgangsbohrungen und Dichtungsausnehmungen und Konturen zur Realisierung der Schnittstellen auf.

Aus der GB 463 015 A ist eine dynamoelektrische Maschine bekannt, deren Gehäuse durch Gießen oder Aufspritzen von Metall auf die Außenseite des Statorkerns und der Wicklung gebildet wird. Hierzu sind das Blechpaket und die Wicklungen von einer Gussmasse umhüllt, die auch Kühlrippen und eine Spinne zum Halten des Lagers enthält. Füße und Flansche zum Befestigen anderer Teile können auch einstückig mit der Masse ausgebildet sein.

Aus der US 2013/207505 A1 ist ein Rotor mit einem zylindrischen Eisenkern mit einem Durchgangsloch zur Aufnahme einer Drehwelle und einem leitfähigen Käfigläufer mit mehreren leitfähigen Stäben und einem Paar ringförmiger leitender Endringe bekannt. Der Rotor umfasst ferner eine leitfähige Verstärkungsschicht, die sich auf mindestens einem Teil einer Außenfläche des leitfähigen Endrings erstreckt. Die leitfähige Verstärkungsschicht wird durch Sprühen von leitfähigen Partikeln in fester Phase auf die Außenfläche des leitfähigen Endrings gebildet.

Die DE 10 2016 000819 A1 betrifft einen Statorträger für eine elektrische Maschine mit einer Mehrzahl von von einem Kühlmedium zum Kühlen des Statorträgers durchströmbaren Kühlkanälen, wobei die Kühlkanäle teilweise durch ein Trägerelement und teilweise durch eine mittels eines generativen Herstellungsverfahrens auf das Trägerelement aufgebrachten Schicht begrenzt sind.

Die JP 2013 224469 A betrifft eine Verbindungsstruktur und ein Verbindungsverfahren, das die Festigkeit eines feststehenden Teils sicherstellen kann, wenn eine Verbindung befestigt wird, die aus verschiedenen Materialien besteht, beispielsweise einer Laufradschale und einer vorderen Abdeckung, mittels Kaltgasspray. Hierbei besteht ein erstes Basismaterial aus Metall, ein zweites Basismaterial ist aus einem von dem ersten Basismetall verschiedenen Metall gebildet, und eine Metallschicht wird in der Nähe einer Verbindung zwischen dem ersten und dem zweiten Basismaterial mittels Kaltspritzen unter Verwendung derselben Art von Metallpartikeln wie des ersten Basismaterials gebildet.

Der Erfindung liegt die Aufgabe zugrunde, eine rotierende elektrische Maschine und ein Verfahren zur Herstellung einer rotierenden elektrischen Maschine anzugeben, die insbesondere hinsichtlich der Verbindung von Maschinenkomponenten der elektrischen Maschine verbessert sind.

Die Aufgabe wird erfindungsgemäß hinsichtlich der rotierenden elektrischen Maschine durch die Merkmale des Anspruchs 1 und hinsichtlich des Verfahrens durch die Merkmale des Anspruchs 4 gelöst.

Vorteilhafte Ausgestaltungen der Erfindung sind Gegenstand der Unteransprüche.

Eine erfindungsgemäße rotierende elektrische Maschine weist eine zusammenhängende Beschichtung mit einer durch Kaltgasspritzen hergestellten Verbindungsschicht auf, durch die mehrere Maschinenkomponenten der elektrischen Maschine fest miteinander verbunden sind und eine Außenoberfläche der elektrischen Maschine gebildet wird.

Durch die feste Verbindung von Maschinenkomponenten der elektrischen Maschine mit der Verbindungsschicht können mechanische Verbindungselemente zur Verbindung dieser Maschinenkomponenten entfallen. Dadurch werden vorteilhaft die Anzahl der Bauteile und die Bauteilvarianz der elektrischen Maschine reduziert. Ferner wird die Montage der elektrischen Maschine vereinfacht, da ein aufwändiges Positionieren und Fixieren von mechanischen Verbindungselementen zur Verbindung dieser Maschinenkomponenten entfällt.

Ferner kann durch die zusammenhängende Beschichtung mit der Verbindungsschicht das Eindringen unerwünschter Medien in die elektrische Maschine verhindert oder reduziert werden. Insbesondere kann die Verbindungsschicht Dichtungsfunktionen übernehmen, für die sonst separate Dichtelemente vorgesehen sind, so dass auch die Anzahl von Dichtelementen vorteilhaft reduziert werden kann und die Montage der elektrischen Maschine weiter vereinfacht werden kann.

Außerdem kann auch die Ausbildung der durch die Verbindungsschicht miteinander verbundenen Maschinenkomponenten vorteilhaft vereinfacht werden, da diese Maschinenkomponenten keine oder weniger Schnittstellen für mechanische Verbindungselemente und Dichtelemente wie Gewinde, Durchgangsbohrungen und Dichtungsausnehmungen aufweisen müssen.

Des Weiteren kann durch den Wegfall oder die Reduzierung mechanischer Verbindungselemente und Dichtelemente die Außenoberfläche der elektrischen Maschine deutlich glatter und einfacher gestaltet werden, wodurch eine Verschmutzung der Außenoberfläche erschwert und eine Reinigung der Außenoberfläche erleichtert wird.

Eine Ausgestaltung der Erfindung sieht vor, dass wenigstens eine der durch die Verbindungsschicht miteinander verbundenen Maschinenkomponenten aus Aluminium oder einer Aluminiumlegierung gefertigt ist.

Gegenüber beispielsweise massiven Edelstahlkomponenten können durch die Fertigung von Maschinenkomponenten aus Aluminium oder einer Aluminiumlegierung die Materialkosten für diese Maschinenkomponenten reduziert werden. Außerdem kann durch die Fertigung von Maschinenkomponenten aus Aluminium oder einer Aluminiumlegierung statt beispielsweise aus Edelstahl die Wärmeabfuhr aus der elektrischen Maschine verbessert werden.

Eine weitere Ausgestaltung der Erfindung sieht vor, dass die Verbindungsschicht aus Aluminium oder einer Aluminiumlegierung oder einem Stahl oder einem Edelstahl gefertigt ist.

Eine Fertigung der Verbindungsschicht aus Aluminium oder einer Aluminiumlegierung ist vorteilhaft, wenn an die Festigkeit der Verbindungsschicht keine besonderen Anforderungen gestellt werden oder die Wärmeabfuhr verbessert werden soll. Eine Fertigung der Verbindungsschicht aus Stahl oder Edelstahl ist vorteilhaft, wenn an die Festigkeit der Verbindungsschicht besondere Anforderungen gestellt werden.

Weitere Ausgestaltungen der Erfindung sehen vor, dass wenigstens eine der durch die Verbindungsschicht miteinander verbundenen Maschinenkomponenten ein Lagerschild oder ein Stator oder ein Flansch der elektrischen Maschine ist.

Die vorgenannten Maschinenkomponenten weisen in der Regel Außenoberflächen auf, die für eine Beschichtung mit der Verbindungsschicht und eine Verbindung dieser Maschinenkomponenten miteinander besonders geeignet sind.

Eine weitere Ausgestaltung der Erfindung sieht vor, dass durch die Verbindungsschicht miteinander verbundene Maschinenkomponenten nicht durch mechanische Verbindungselemente miteinander verbunden sind.

Diese Ausgestaltung der Erfindung sieht den vollständigen Wegfall von mechanischen Verbindungselementen zur Verbindung von Maschinenkomponenten vor, die durch die Verbindungsschicht miteinander verbunden sind. Dies hat die oben bereits erwähnten Vorteile der Reduzierung der Bauteile sowie der Vereinfachung der Montage und der Ausbildung der Maschinenkomponenten der elektrischen Maschine.

Bei einem erfindungsgemäßen Verfahren zur Herstellung einer rotierenden elektrischen Maschine werden Maschinenkomponenten der elektrischen Maschine aneinander angeordnet und anschließend fest miteinander verbunden, indem sie durch Kaltgasspritzen mit einer zusammenhängenden Verbindungsschicht beschichtet werden, durch die eine Außenoberfläche der elektrischen Maschine gebildet wird.

Das erfindungsgemäße Verfahren ermöglicht die Herstellung einer rotierenden elektrischen Maschine mit den oben bereits genannten Vorteilen. Die Fertigung der Verbindungsschicht durch Kaltgasspritzen ist dabei besonders vorteilhaft, weil eine große Materialauswahl zur Durchführung des Kaltgasspritzens zur Verfügung steht, die Schichtdicke variabel gestaltet werden kann, der bei dem Kaltgasspritzen erfolgende Wärmeeintrag auf die Maschinenkomponenten gering ist und das Verfahren mit einer hohen Aufbaugeschwindigkeit für den Aufbau der Verbindungsschicht arbeitet.

Eine Ausgestaltung des Verfahrens sieht vor, dass wenigstens zwei Maschinenkomponenten vor der Beschichtung mit der Verbindungsschicht miteinander verklebt werden.

Diese Ausgestaltung des Verfahrens ermöglicht vorteilhaft, dass Maschinenkomponenten vor ihrer Beschichtung mit der Verbindungsschicht durch Verkleben relativ zueinander fixiert werden, so dass sie während des Beschichtens nicht gegeneinander verrutschen.

Die im Folgenden genannten Ausgestaltungen des Verfahrens entsprechen oben bereits genannten Ausgestaltungen einer erfindungsgemäßen elektrischen Maschine mit den dort bereits genannten Vorteilen.

Eine dieser Ausgestaltungen des Verfahrens sieht vor, dass wenigstens eine der durch die Verbindungsschicht miteinander verbundenen Maschinenkomponenten aus Aluminium oder einer Aluminiumlegierung gefertigt wird.

Eine weitere Ausgestaltung des Verfahrens sieht vor, dass die Verbindungsschicht aus Aluminium oder einer Aluminiumlegierung oder einem Stahl oder einem Edelstahl gefertigt wird.

Weitere Ausgestaltung des Verfahrens sehen vor, dass eine der durch die Verbindungsschicht miteinander verbundenen Maschinenkomponenten ein Lagerschild, ein Stator oder ein Flansch der elektrischen Maschine ist.

Eine weitere Ausgestaltung des Verfahrens sieht vor, dass durch die Verbindungsschicht miteinander verbundene Maschinenkomponenten nicht durch mechanische Verbindungselemente miteinander verbunden werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit einer Zeichnung näher erläutert werden.

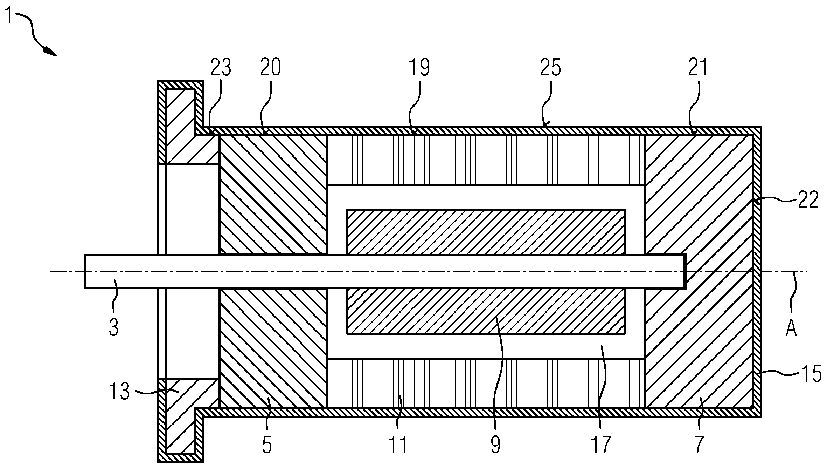

Dabei zeigt die einzige Figur schematisch eine Schnittdarstellung einer rotierenden elektrischen Maschine 1.

Die elektrische Maschine 1 weist eine Maschinenwelle 3, zwei Lagerschilde 5, 7, einen Rotor 9, einen Stator 11, einen Flansch 13 und eine Verbindungsschicht 15 auf.

Die Maschinenwelle 3 ist durch (nicht dargestellte) Lager, die in den Lagerschilden 5, 7 angeordnet sind, um eine entlang ihrer Längsachse verlaufende Drehachse A drehbar gelagert und durch einen ersten Lagerschild 5 hindurch aus dem Inneren der elektrischen Maschine 1 herausgeführt. Die Drehachse A definiert eine axiale Richtung.

Der Rotor 9 ist zwischen den beiden Lagerschilden 5, 7 an der Maschinenwelle 3 angeordnet.

Der Stator 11 ist um den Rotor 9 herum und von dem Rotor 9 durch einen Luftspalt 17 beabstandet angeordnet. Der Stator 11 weist eine von der Maschinenwelle 3 und dem Rotor 9 abgewandte Statoraußenoberfläche 19 auf, die ringartig um die Drehachse A herum verläuft.

Der erste Lagerschild 5 weist eine von der Maschinenwelle 3 abgewandte erste Lagerschildaußenoberfläche 20 auf, die ringartig um die Drehachse A verläuft und an die Statoraußenoberfläche 19 grenzt.

Der zweite Lagerschild 7 weist eine von der Maschinenwelle 3 abgewandte zweite Lagerschildaußenoberfläche 21 auf, die ringartig um die Drehachse A verläuft und der ersten Lagerschildaußenoberfläche 20 gegenüberliegend an die Statoraußenoberfläche 19 grenzt. Ferner weist der zweite Lagerschild 7 eine dritte Lagerschildaußenoberfläche 22 auf, die senkrecht zu der Drehachse A verläuft, an die zweite Lagerschildaußenoberfläche 22 grenzt und ein von dem Rotor 9 und dem Stator 11 abgewandtes axiales Ende des zweiten Lagerschilds 7 bildet.

Der Flansch 13 ist an einer von dem Rotor 9 und dem Stator 11 abgewandten Seite des ersten Lagerschildes 5 um die Maschinenwelle 3 herum angeordnet. Der Flansch 13 weist eine an die erste Lagerschildaußenoberfläche 20 grenzende Flanschaußenoberfläche 23 auf.

Die Verbindungsschicht 15 überzieht lückenlos die Statoraußenoberfläche 19, die Lagerschildaußenoberflächen 20 bis 22 und die Flanschaußenoberfläche 23 und ist stoffschlüssig mit der Statoraußenoberfläche 19, den Lagerschildaußenoberflächen 20 bis 22 und der Flanschaußenoberfläche 23 verbunden. Dadurch sind die Lagerschilde 5, 7, der Stator 11 und der Flansch 13 fest miteinander verbunden. Die Lagerschilde 5, 7, der Stator 11 und der Flansch 13 sind durch keine mechanischen Verbindungselemente miteinander verbunden. Durch die Verbindungsschicht 15 wird eine Außenoberfläche 25 der elektrischen Maschine 1 gebildet.

Der erste Lagerschild 5 und/oder der zweite Lagerschild 7 und/oder der Flansch 13 sind beispielsweise aus Aluminium oder aus einer Aluminiumlegierung oder aus einem anderen günstigen und vorzugsweise gut wärmeleitenden Material gefertigt.

Die Verbindungsschicht 15 ist beispielsweise aus Aluminium oder einer Aluminiumlegierung oder einem Stahl oder einem Edelstahl gefertigt.

Bei der Herstellung der elektrischen Maschine 1 werden die Lagerschilde 5, 7, der Stator 11 und der Flansch 13 aneinander angeordnet und anschließend fest miteinander verbunden, indem die Statoraußenoberfläche 19, die Lagerschildaußenoberflächen 20 bis 22 und die Flanschaußenoberfläche 23 lückenlos durch Kaltgasspritzen mit der Verbindungsschicht 15 beschichtet werden. Vor der Beschichtung mit der Verbindungsschicht 15 kann der erste Lagerschild 5 mit dem Flansch 13 und/oder mit dem Stator 11 durch einen Klebstoff verbunden werden, um seine Position relativ zu dem Flansch 13 und/oder zu dem Stator 11 für die Beschichtung zu fixieren. Alternativ oder zusätzlich kann der zweite Lagerschild 7 vor der Beschichtung mit der Verbindungsschicht 15 mit dem Stator 11 durch einen Klebstoff verbunden werden, um seine Position relativ zu dem Stator 11 für die Beschichtung zu fixieren.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Rotierende elektrische Maschine (1), aufweisend eine zusammenhängende Beschichtung mit einer durch Kaltgasspritzen hergestellten Verbindungsschicht (15), durch die mehrere Maschinenkomponenten (5, 7, 11, 13) der elektrischen Maschine (1) fest miteinander verbunden sind und eine Außenoberfläche (25) der elektrischen Maschine (1) gebildet wird, wobei die durch die Verbindungsschicht (15) miteinander verbundenen Maschinenkomponenten (5, 7, 11, 13) zwei Lagerschilder (5, 7), ein Stator (11) und ein Flansch (13) der elektrischen Maschine (1) sind, wobei die Verbindungsschicht (15) lückenlos eine Statoraußenoberfläche (19), Lagerschildaußenoberflächen (20 bis 22) und eine Flanschaußenoberfläche (23) überzieht und stoffschlüssig mit der Statoraußenoberfläche (19), den Lagerschildaußenoberflächen (20 bis 22) und der Flanschaußenoberfläche (23) verbunden ist, wodurch die Lagerschilder (5, 7), der Stator (11) und der Flansch (13) fest miteinander verbunden sind, wobei durch die Verbindungsschicht (15) miteinander verbundene Maschinenkomponenten (5, 7, 11, 13) nicht durch mechanische Verbindungselemente miteinander verbunden sind und wobei durch die Verbindungsschicht (15) eine Außenoberfläche (25) der elektrischen Maschine (1) gebildet wird.

2. Rotierende elektrische Maschine (1) nach Anspruch 1,
**dadurch gekennzeichnet, dass** wenigstens eine der durch die Verbindungsschicht (15) miteinander verbundenen Maschinenkomponenten (5, 7, 13) aus Aluminium oder einer Aluminiumlegierung gefertigt ist.

3. Rotierende elektrische Maschine (1) nach einem der vorhergehenden Ansprüche,
**dadurch gekennzeichnet, dass** die Verbindungsschicht (15) aus Aluminium oder einer Aluminiumlegierung oder einem Stahl oder

4. Verfahren zur Herstellung einer rotierenden elektrischen Maschine (1) nach einem der Ansprüche 1 bis 3, wobei
- Maschinenkomponenten (5, 7, 11, 13) der elektrischen Maschine (1) aneinander angeordnet werden und
- anschließend fest miteinander verbunden werden, indem sie durch Kaltgasspritzen mit einer zusammenhängenden Verbindungsschicht (15) beschichtet werden, durch die eine Außenoberfläche (25) der elektrischen Maschine (1) gebildet wird.

5. Verfahren nach Anspruch 4,
**dadurch gekennzeichnet, dass** wenigstens zwei Maschinenkomponenten (5, 7, 11, 13) vor der Beschichtung mit der Verbindungsschicht (15) miteinander verklebt werden.

6. Verfahren nach Anspruch 4 oder 5,
**dadurch gekennzeichnet, dass** wenigstens eine der durch die Verbindungsschicht (15) miteinander verbundenen Maschinenkomponenten (5, 7, 13) aus Aluminium oder einer Aluminiumlegierung gefertigt wird.

7. Verfahren nach einem der Ansprüche 4 bis 6,
**dadurch gekennzeichnet, dass** die Verbindungsschicht (15) aus Aluminium oder einer Aluminiumlegierung oder einem Stahl oder einem Edelstahl gefertigt wird.

## Claims

1. Rotating electric machine (1), having a continuous coating with a connecting layer (15) produced by way of gas dynamic cold spraying, by way of which a plurality of machine components (5, 7, 11, 13) of the electric machine (1) are permanently connected to one another and an outer surface (25) of the electric machine (1) is formed, wherein the machine components (5, 7, 11, 13) connected to one another by way of the connecting layer (15) are two end shields (5, 7), a stator (11) and a flange (13) of the electric machine (1), wherein the connecting layer (15) coats a stator outer surface (19), end shield outer surfaces (20 to 22) and a flange outer surface (23) without gaps and is connected to the stator outer surface (19), the end shield outer surfaces (20 to 22) and the flange outer surface (23) with a material bond, whereby the end shields (5, 7), the stator (11) and the flange (13) are permanently connected to one another, wherein machine components (5, 7, 11, 13) connected to one another by way of the connecting layer (15) are not connected to one another by way of mechanical connecting elements and wherein an outer surface (25) of the electric machine (1) is formed by the connecting layer (15).

2. Rotating electric machine (1) according to claim 1, **characterised in that** at least one of the machine components (5, 7, 13) connected to one another by way of the connecting layer (15) is manufactured from aluminium or an aluminium alloy.

3. Rotating electric machine (1) according to one of the preceding claims,
**characterised in that** the connecting layer (15) is manufactured from aluminium or an aluminium alloy or a steel or a stainless steel.

4. Method for producing a rotating electric machine (1) according to one of claims 1 to 3, wherein
- machine components (5, 7, 11, 13) of the electric machine (1) are arranged on top of one another and
- are subsequently permanently connected to one another by being coated with a continuous connecting layer (15) by way of gas dynamic cold spraying, by way of which an outer surface (25) of the electric machine (1) is formed.

5. Method according to claim 4,
**characterised in that** at least two machine components (5, 7, 11, 13) are adhesively bonded to one another before the coating with the connecting layer (15).

6. Method according to claim 4 or 5,
**characterised in that** at least one of the machine components (5, 7, 13) connected to one another by way of the connecting layer (15) is manufactured from aluminium or an aluminium alloy.

7. Method according to one of claims 4 to 6,
**characterised in that** the connecting layer (15) is manufactured from aluminium or an aluminium alloy or a steel or a stainless steel.

## Revendications

1. Machine (1) électrique tournante, comportant un revêtement d'un seul tenant, ayant une couche (15) de liaison produite par pulvérisation au gaz froid, par laquelle plusieurs éléments (5, 7, 11, 13) de la machine (1) électrique sont reliés fixement entre eux, et une surface (25) extérieure de la machine (1) électrique est formée, dans laquelle les éléments (5, 7, 11, 13) de machine, reliés entre eux par la couche (15) de liaison, sont deux flasques (5, 7), un stator (11) et une bride (13) de la machine (1) électrique,
la couche (15) de liaison recouvrant, sans lacune, une surface (19) extérieur de stator, des surfaces (20 à 22) extérieures de flasque et une surface (23) extérieure de bride, et étant reliée à coopération de matière à la surface (19) extérieure de stator, aux surfaces (20 à 22) extérieures de flasque et à la surface (23) extérieure de bride, grâce à quoi les flasques (5, 7), le stator (11) et la bride (13) sont reliés fixement entre eux, dans laquelle des éléments (5, 7, 11, 13) de machine, reliés entre eux par la couche (15) de liaison, ne sont pas reliés entre eux par des éléments de liaison mécaniques et dans laquelle il est formé, par la couche (15) de liaison, une surface (25) extérieure de la machine (1) électrique.

2. Machine (1) électrique tournante suivant la revendication 1,
**caractérisée en ce qu'**au moins l'un des éléments (5, 7, 13) de machine, reliés entre eux par la couche (15) de liaison, est en aluminium ou en un alliage d'aluminium.

3. Machine (1) électrique tournante suivant l'une des revendications précédentes,
**caractérisée en ce que** la couche (15) de liaison est en aluminium ou en un alliage d'aluminium ou en acier ou en acier fin.

4. Procédé de fabrication d'une machine (1) électrique tournante suivant l'une des revendications 1 à 3, dans lequel
- on met, les uns à côté des autres, des éléments (5, 7, 11, 13) de la machine (1) électrique et
- on les relie ensuite fixement entre eux en les revêtant, par pulvérisation au gaz froid, d'une couche (15) de liaison d'un seul tenant, par laquelle on forme une surface (25) extérieure de la machine (1) électrique.

5. Procédé suivant la revendication 4,
**caractérisé en ce que** l'on colle entre eux au moins deux éléments (5, 7, 11, 13) de la machine avant le revêtement par la couche (15) de liaison.

6. Procédé suivant la revendication 4 ou 5,
**caractérisé en ce qu'**au moins l'un des éléments (5, 7, 13) de la machine, reliés entre eux par la couche (15) de liaison, est en aluminium ou en un alliage d'aluminium.

7. Procédé suivant l'une des revendications 4 à 6,
**caractérisé en ce que** la couche (15) de liaison est en aluminium ou en un alliage d'aluminium ou en acier ou en acier fin.
